# EUROPEAN PATENT APPLICATION

(11) **EP 0 719 794 A1**
(43) Date of publication of application: **03.07.1996**
(21) Application number: 94926393.3
(22) Date of filing: 13.09.1994
(51) Int. Cl.: C08F 2/32

(54) **PROCESS FOR PRODUCING AMORPHOUS POLYMER PARTICLES**

(30) Priority: 14.09.1993 JP 228650/93
(71) Applicant: Kao Corporation, Chuo-Ku Tokyo 103 (JP)
(72) Inventor: NAMBU, Hiromi, Wakayama 640 (JP); IGARASHI, Tadashi, Wakayama 640 (JP)
(74) Representative: Grünecker, Kinkeldey, Stockmair & Schwanhäusser Anwaltssozietät
(86) International application number: JP9401513
(87) International publication number: WO9507938

(57) **Abstract**

A process for producing irregular-shaped polymer particles, comprising carrying out reverse phase suspension polymerization of a water-soluble polymerizable monomer in a hydrophobic organic solvent inert to the polymerization in the presence of a water-soluble radical polymerization initiator, the process being characterized in that the reverse phase suspension polymerization is carried out in the presence of a surface active agent having an HLB of 13 or more, exclusive of a glycoside compound having a chemical structure in which a hydrogen atom of a hemi-acetal bond is substituted for a hydrophobic group and a gluconamide compound, as a dispersant, while gradually feeding an aqueous solution of the water-soluble polymerizable monomer to the hydrophobic organic solvent under reflux.

## Description

### Technical Field

This invention relates to a process for producing irregular-shaped polymer particles and more particularly a process for producing irregular-shaped polymer particles which have a large average particle size, contain an extremely small proportion of fine particles having a particle size of 100 µm, have a small apparent density and exhibit excellent water absorption characteristics, excellent air permeability and excellent liquid permeability, and are therefore useful as a water-absorbing resin.

### Background Art

Water-absorbing resins have widely been used for their water absorbing and retaining properties in the medical field (e.g., as sanitary materials), the food industrial field, and the agricultural and horticultural field. When applied particularly to sanitary products such as sanitary napkins and disposable diapers, water-absorbing resins are required to have not only a high water absorption per unit weight and a high rate of water absorption but also a large average particle size, not containing fine particles smaller than 100 µm which tend to cause air pollution by dust. The water absorption per unit weight depends on the molecular structure of the resin. With the weight being equal, as the particle size of a powdered resin is reduced, the surface area increases, and the rate of water absorption is considered to increase at the same time. Accordingly, there have been various proposals on production of water-absorbing resins having a molecular structure fit to water absorption and a small particle size.

For example, Japanese Patent Application Laid-Open 57-167302 proposes a process for producing a water-absorbing resin in an attempt to improve rate of absorption, in which polymerization is carried out in the presence of a specific surface active agent as a dispersion stabilizer thereby to provide a water-absorbing resin as fine particles (1 to 40 µm). However, water-absorbing resin particles with their size merely reduced form lumps of powder in the course of water absorption, failing to achieve a sufficient speed of water absorption.

Japanese Patent Application Laid-Open 62-106902 discloses a process for producing a water-absorbing porous polymer having voids in the inside thereof and a large surface area, which comprises preparing an O/W/O emulsion of a monomer and polymerizing the monomer. However, the process is disadvantageous in that the step of preparing an O/W/O emulsion is complicated and that the voids of the resulting polymer are not always continuous for obtaining a sufficiently high initial rate of absorption.

On the other hand, Japanese Patent Application Laid-Open 61-200102 proposes a process comprising initiating water-in-oil reversed phase suspension polymerization at 0 to 20°C, maintaining that temperature until a polymerization rate of 30% is reached, and then raising the temperature to complete the polymerization, thereby obtaining water-absorbing resin particles having a high void content and a high rate of water absorption in which fine particles of 1 to 40 µm are bonded together relatively loosely. In this process, it is necessary to control the polymerization temperature within the range of from 0 to 20° C until the rate of polymerization reaches 30%. It is extremely difficult, however, to efficiently remove the heat of polymerization to keep the polymerization temperature at such a low level, so that the process is not suited to mass production. Additionally, the process is not efficient because of involvement of considerable adhesion of the polymer produced to the polymerization vessel during the polymerization.

On the other hand, known processes for producing a water-absorbing resin by reverse phase suspension polymerization of an acrylic acid alkali metal salt, etc. in the presence of a sorbitan fatty acid ester as a dispersant include those described in Japanese Patent Publications 54-30710 and 60-25045. The former uses sorbitan fatty acid esters having an HLB of 3 to 6, while the latter those having an HLB of 8 to 12. Whichever process is followed, the resulting resin contains fine particles of 100 µm or smaller in a considerably high proportion and should have a counter-measure taken against dusting. Further, the resin is apt to form lumps on swelling only to show slow absorption and poor liquid permeability.

Japanese Patent Application Laid-Open 61-43606 proposes a process for producing a super absorbent resin, which comprises carrying out polymerization in the presence of a sucrose fatty acid ester having an HLB of 1 to 15. However, the process still failed to eliminate the above problem because the resin obtained contains a considerable proportion of fine particles having a particle size of 100 µm or smaller similarly to that obtained by the above-described process of using a sorbitan fatty acid ester.

Japanese Patent Application Laid-Open 61-87702 proposes a process for producing a water-absorbing resin, in which polymerization is conducted in the presence of a sucrose fatty acid ester having an HLB of 2 to 16, and Japanese Patent Application Laid-Open 62-172006 discloses a process for producing a water-absorbing resin, in which polymerization is conducted in the presence of a polyglycerin fatty acid ester having an HLB of 2 to 16. In these processes, however, since a monomer is charged all at once and polymerized, it is very difficult to control the polymerization temperature, making the processes unsuitable for mass production. Besides, the processes are inefficient because of considerable adhesion of the polymer produced to the polymerization vessel.

### Disclosure of the Invention

Accordingly, an object of the present invention is to provide a process for producing irregular-shaped polymer particles which have a large average particle size, contain an extremely small proportion of fine particles having a particle size of 100 µm or smaller, have a small apparent density, and exhibit excellent water absorption characteristics such as an initial rate of water absorption, excellent air permeability and excellent liquid permeability, and also exhibit high gel strength after water absorption and are therefore useful as a water-absorbing resin; which process can be carried out through simple operation, achieves excellent productivity, and is applicable to mass production.

As a result of extensive investigations, the inventors of the present invention have found that the above object of the present invention is accomplished by using a surface active agent having a specific HLB as a dispersant in polymerization of a water-soluble polymerizable monomer.

The present invention has been completed based on the above finding. It provides a process for producing irregular-shaped polymer particles, comprising carrying out reverse phase suspension polymerization of a water-soluble polymerizable monomer in a hydrophobic organic solvent inert to the polymerization in the presence of a water-soluble radical polymerization initiator, the process being characterized in that:
the reverse phase suspension polymerization is carried out in the presence of a surface active agent having an HLB of 13 or more, exclusive of a glycoside compound having a chemical structure in which a hydrogen atom of a hemi-acetal bond is substituted for a hydrophobic group and a gluconamide compound, as a dispersant, while gradually feeding an aqueous solution of the water-soluble polymerizable monomer to the hydrophobic organic solvent under reflux.

The irregular-shaped polymer particles obtained by the process of the present invention are amorphous polymer particles which have a shape quite different from a spherical shape, an average particle size of 100 µm or greater as measured by sieving (specified by JIS), and a high void content. Therefore, a water-absorbing resin, which is an agglomerate of the irregular-shaped polymer particles, is excellent in rate of water absorption, air permeability, liquid permeability, and gel strength after water absorption.

Further, the irregular-shaped polymer particles obtained by the process of the present invention contain little fine powder of 100 µm or less which may give rise to problems such as air pollution by dust in the subsequent processing probably because several to several tens of monomer fine particles are adhered together in the stage of low degree of polymerization.

### Brief Description of the Drawings

Fig. 1 is a schematic illustration of an apparatus used in Examples and Comparative Examples for measuring a water absorption representing a rate of water absorption.

Fig. 2 is a schematic illustration of an apparatus used in Examples and Comparative Examples for measuring a rate of permeation to physiological saline.

### Detailed Description of the Invention

The process for producing irregular-shaped polymer particles according to the present invention will be explained below in detail. Unless otherwise specified, all the percents are by weight.

The water-soluble polymerizable monomer which can be used in the present invention preferably includes vinyl monomers having a polymerizable unsaturated group, such as olefinic unsaturated carboxylic acids or salts thereof, olefinic unsaturated carboxylic acid esters, olefinic unsaturated sulfonic acids or salts thereof, olefinic unsaturated phosphoric acids or salts thereof, olefinic unsaturated amines, olefinic unsaturated ammonium salts, and olefinic unsaturated amides. Preferred of them are olefinic unsaturated carboxylic acids or salts thereof.

The olefinic unsaturated carboxylic acids or salts thereof include acrylic acid, methacrylic acid, maleic acid, fumaric acid, or alkali salts of these acids. The olefinic unsaturated carboxylic esters include methoxypolyethylene glycol (meth)acrylate, phenoxypolyethylene glycol (meth)acrylate, and hydroxyethyl (meth)acrylate. The olefinic unsaturated sulfonic acids or salts thereof include (meth)acrylamidomethylpropanesulfonic acid, allylsulfonic acid or alkali salts thereof. The olefinic unsaturated phosphoric acids or salts thereof include (meth)acryloyl(poly)oxyethylenephosphoric esters or alkali salts thereof. The olefinic unsaturated amines include dimethylaminoethyl (meth)acrylate. The olefinic unsaturated ammonium salts include (meth)acryloyloxyethylenetrimethylammonium halides. The olefinic unsaturated amides include (meth)acrylamide; (meth)acrylamide derivatives, such as N-methyl(meth)acrylamide, N-ethyl(meth)acrylamide, and N-propyl(meth)acrylamide; and vinylmethylacetamide. These monomers may be used either individually or as a mixture of two or more thereof. The alkali salts as referred to above include alkali metal salts, alkaline earth metal salts, and ammonium salts.

The aqueous solution of the water-soluble polymerizable monomer preferably has a monomer concentration of from 10 to 80%, still preferably of from 40 to 60%.

The water-soluble radical initiator which can be used in the present invention is not particularly limited. Examples of suitable initiators include ketone peroxides, e.g., methyl ethyl ketone peroxide and methyl isobutyl ketone peroxide; dialkyl peroxides, e.g., di-t-butyl peroxide and t-butylcumyl peroxide; alkyl peroxy esters, e.g., t-butyl peroxyacetate, t-butyl peroxyisobutyrate, and t-butyl peroxypivalate; hydrogen peroxide; persulfates, e.g., potassium persulfate and ammonium persulfate; perchlorates, e.g., potassium perchlorate and sodium perchlorate; halogenic acid salts, e.g., potassium chlorate and potassium bromate; and azo compounds, e.g., 2-(carbamoylazo)isobutyronitrile, 2,2-azobis(N,N'-dimethyleneisobutylamidine) dihydrochloride, 2,2'-azobis(2-amidinopropane) dihydrochloride, 2,2'-azobis(N,N'-dimethyleneisobutylamidine), 4,4'-azobis(4-cyanopentanoic acid), azobisisobutyronitrile, 2,2'-azobis(4-methoxy-2,4-dimethylvaleronitrile), (1-phenylethyl)azodiphenylmethane, dimethyl 2,2'-azobisisobutyrate, 2,2'-azobis(2-methylbutyronitrile), 1,1'-azobis(1-cyclohexanecarbonitrile), 2,2'-azobis(2,4,4'-trimethylpentane), 2-phenylazo-2,4-dimethyl-4-methoxyvaleronitrile, and 2,2'-azobis(2-methylpropane). These initiators may be used either individually or as a combination of two or more thereof.

The water-soluble radical polymerization initiator is used in an amount usually of from 0.01 to 10%, and preferably of from 0.02 to 5%, based on the water-soluble polymerizable monomer.

The inert hydrophobic organic solvent which can be used in the polymerization includes aliphatic hydrocarbons, such as n-pentane, cyclopentane, n-hexane, cyclohexane, n-heptane, and methylcyclohexane; aromatic hydrocarbons, such as benzene and toluene; aliphatic alcohols having 4 to 6 carbon atoms, such as n-butyl alcohol and n-amyl alcohol; aliphatic ketones, such as methyl ethyl ketone; and aliphatic esters, such as ethyl acetate. These solvents may be used either individually or as a combination of two or more thereof.

The hydrophobic organic solvent is preferably used in an amount of 50 to 500% based on the aqueous solution of the water-soluble polymerizable monomer.

The dispersant which can be used in the polymerization of the water-soluble polymerizable monomer in the present invention is a surface active agent having an HLB of 13 or more, preferably of from 13 to 18, exclusive of a glycoside compound having a chemical structure in which a hydrogen atom of a hemi-acetal bond is substituted for a hydrophobic group and a gluconamide compound (hereinafter referred to as "surface active agent A").

If the HLB is less than 13, the polymer is obtained as spherical particles or agglomerates. A surface active agent whose HLB exceeds 18 is hardly soluble in the hydrophobic organic solvent and therefore hardly acts as a protective colloid only to provide a lumpy polymer, failing to form desired irregular-shaped polymer particles. Hence, the HLB preferably falls within the above range.

As is well known, "HLB" as used herein stands for hydrophilic-lipophilic balance and can generally be obtained by an emulsification test or by calculation using analytical values of an emulsifying agent as described, e.g., in Karigome Takao, KAIMEN KASSEIZAI NO SEISHITU TO OYO, 2nd ed., pp. 89-93, Sachi Syobo. The HLB as referred to in the present invention is the value obtained by the calculation method. More specifically, it is calculated according to the Griffin's formula to begin with. As for those compounds the HLB of which cannot be obtained by the Griffin's formula, the HLB is calculated according to the Davy's formula and then the Oda's method utilizing an organic concept diagram.

Surface active agent A to be used is not particularly limited and preferably includes, for example, nonionic surface active agents, such as polyoxyalkylene sorbitan fatty acid esters, sucrose fatty acid esters, polyoxyalkylene sorbitol fatty acid esters, polyoxyalkylene glycerol fatty acid esters, and polyglycerin fatty acid esters. The following compounds may be mentioned as specific examples.

The polyoxyalkylene sorbitan fatty acid esters preferably include those having an HLB of 13 to 18, such as polyoxyethylene sorbitan monolaurate (EO: 4 mol- or 6 mol-adduct), polyoxyethylene sorbitan monolaurate (EO: 20 mol-adduct), polyoxyethylene sorbitan monopalmitate (EO: 20 mol-adduct), and polyoxyethylene sorbitan monostearate (EO: 20 mol- or 6 mol-adduct). The sucrose fatty acid esters preferably include sucrose stearate, sucrose palmitate, sucrose oleate, and sucrose laurate. Preferred of them are those having an HLB of 13 to 18, still preferably 15 to 18, particularly preferably 16 to 18. The polyoxyalkylene sorbitol fatty acid esters preferably include those having an HLB of 13 to 18, such as polyoxyethylene sorbitol tetraoleate (EO: 60 mol-adduct), polyoxyethylene sorbitol tetralaurate (EO: 60 mol-adduct), polyoxyethylene sorbitol tetrapalmitate (EO: 60 mol-adduct), and polyoxyethylene sorbitol tetrastearate (EO: 60 mol-adduct). The polyoxyalkylene glycerol fatty acid esters preferably include those having an HLB of 13 to 18, such as polyoxyethylene glycerol monocaprylate (EO: 40 mol-adduct), polyoxyethylene glycerol monolaurate (EO: 50 mol-adduct), and polyoxyethylene glycerol monostearate (EO: 60 mol-adduct). The polyglycerin fatty acid esters preferably include those having an HLB of 13 to 18, such as octaglycerol monocaprylate, decaglycerol monolaurate, and dodecaglycerol monostearate. Commercially available products may be utilized.

While the alkylene group in the compounds having a polyoxyalkylene moiety is preferably an ethylene group as in the above-enumerated specific examples, compounds having both an ethylene group and a propylene group can also be used as far as their HLB is 13 or greater, preferably from 13 to 18.

While surface active agents A produce a sufficient effect when used individually, they may be used as a combination of two or more thereof. In the latter case, the plural surface active agents A do not need to belong to the same kind, and each surface active agent is not particularly limited in kind.

Where a plurality of surface active agents A are used as a mixture thereof, not all of them need to have an HLB of 13 or more. Individual surface active agents A are not particularly limited in HLB as far as the HLB of the mixture of them is 13 or more, preferably 13 to 18.

Surface active agent A exerts its effect even at a small amount. A suitable amount of surface active agent A to be used is from 0.01 to 20%, preferably from 0.02 to 10%, based on the water-soluble polymerizable monomer. As for sucrose fatty acid esters, in particular, an amount of 0.02 to 2% is the most preferred. If the amount is less than 0.01%, the effect is hardly produced. Addition of more than 20% is of no economical advantage.

In the present invention, reverse phase suspension polymerization of the water-soluble polymerizable monomer is carried out in the hydrophobic organic solvent using an aqueous solution of the water-soluble polymerizable monomer, a water-soluble radical polymerization initiator, and the hydrophobic organic solvent. In order to produce irregular-shaped polymer particles having a large average particle size easily and advantageously, it is essential to conduct the reverse phase suspension polymerization while gradually feeding the aqueous solution of the water-soluble polymerizable monomer to the hydrophobic organic solvent under reflux with the progress of the polymerization of the water-soluble polymerizable monomer. This can be embodied by, for example, methods (1) to (3) described below.
(1) A method in which an aqueous solution of a water-soluble polymerizable monomer is added dropwise to a hydrophobic organic solvent to effect polymerization gradually (successive polymerization).
(2) A method in which an aqueous solution of a water-soluble polymerizable monomer is previously mixed with or dispersed in a part of a hydrophobic organic solvent, and the resulting mixture is added dropwise to the rest of the hydrophobic organic solvent to conduct polymerization (pre-dispersion).
(3) A combination of methods (1) and (2).

While the manner of addition of the water-soluble radical polymerization initiator is not particularly restricted, it is preferred to previously add it to the aqueous solution of the water-soluble polymerizable monomer.

A suitable polymerization temperature is the refluxing temperature of the above-mentioned hydrophobic solvent, which usually ranges from 40 to 150° C, preferably 60 to 90° C. If the temperature exceeds 150°C, the degree of crosslinking extremely increases, resulting in reduction of water absorbability of the resulting polymer. At temperatures lower than 40°C, not only does the speed of polymerization extremely decrease, but the induction period is considerably long, causing a sudden start of polymerization, which tends to lead to formation of a lumpy polymer.

Should the reverse phase suspension polymerization be performed by an all-at-once method in which an aqueous solution of the water-soluble polymerizable monomer and a hydrophobic solvent are mixed all at once to start polymerization, irregular-shaped polymer particles having desired shape and particle size (water-absorbing resin) cannot be produced. Besides, difficulty in removing the heat of polymerization allows a runaway reaction or results in the formation of lumps as large as several centimeters.

When the reverse phase suspension polymerization is carried out, surface active agent A is added to the polymerization system as a dispersant in accordance with the following methods (1) to (4):
(1) A method in which surface active agent A is previously dispersed in the hydrophobic organic solvent.
(2) A method in which surface active agent A is previously dissolved or dispersed in an aqueous solution of the water-soluble polymerizable monomer.
(3) A method in which surface active agent A is slowly added to the system under polymerization.
(4) A combination of methods (1) to (3).

In the present invention, while it is preferred that one of the above-mentioned water-soluble polymerizable monomers is homopolymerized or two or more of them are copolymerized, water-insoluble monomers copolymerizable with the water-soluble polymerizable monomer may be used in combination in a proportion of 50% or lower based on the total monomers. Such copolymerizable water-insoluble monomers include esters between an unsaturated carboxylic acid, e.g., acrylic acid, methacrylic acid, maleic acid or fumaric acid, and an alkyl group having 1 to 22 carbon atoms.

In addition to the above-mentioned hydrophobic solvent, amphiphilic solvents may be used in an amount not exceeding the amount of the hydrophobic solvent. Examples of usable amphiphilic solvents include alcohols, such as methanol, ethanol, propanol, and 2-propanol; ketones, such as acetone; and ethers, such as diethyl ether, dipropyl ether, tetrahydrofuran, and dioxane.

In addition to the surface active agent A, cationic surface active agents, amphoteric surface active agents, anionic surface active agents, high polymeric dispersants, and the like may be used in combination in an amount preferably of 100 parts or less by weight per 100 parts by weight of surface active agent A.

A known crosslinking agent may be added to the polymerization system at any stage before, during or after the polymerization. Suitable crosslinking agents include polyallyl compounds, such as N,N-diallyl(meth)acrylamide, diallylamine, diallyl phthalate, diallyl fumarate, diallyl terephthalate, triallyl cyanurate, and triallyl phosphate; polyvinyl compounds, such as divinylbenzene, N,N-methylenebisacrylamide, ethylene glycol diacrylate, ethylene glycol dimethacrylate, and glycerol trimethacrylate; polyglycidyl ethers, such as ethylene glycol diglycidyl ether, polyethylene glycol diglycidyl ether, and polyglycerin polyglycidyl ether; halo-epoxy compounds, such as epichlorohydrin and α-methylchlorohydrin; polyaldehydes, such as glutaraldehyde and glyoxal; polyols, such as glycerol; polyamines, such as ethylenediamine; hydroxyvinyl compounds, such as 2-hydroxyethyl methacrylate; and inorganic or organic salts of a metal capable of providing a polyvalent ion, such as calcium, magnesium, zinc or aluminum.

Monoglycidyl compounds, such as phenol polyoxyethylene glycidyl ether, may be used as a modifier.

The amount of the crosslinking agent or modifier is arbitrarily selected according to the desired properties of the final product polymer. They are usually used in an amount of 0.01 to 10% based on the polymer produced.

After the polymerization, the resulting polymer is dried by means of a vacuum drier, a fluidized bed drier, etc., either as such or after removing the solvent by decantation or centrifugal separation, to obtain irregular-shaped polymer particles. If necessary, the particle size of the polymer particles thus obtained may be adjusted as desired by grinding or granulation.

It is generally well known that nonionic surface active agents like sorbitan esters and sucrose esters are useful in suspension polymerization of water-soluble monomers to provide spherical polymer particles in a stable manner. While it has not yet been clarified why irregular-shaped polymers are produced in the present invention, it is considered that surface active agent A provides a droplet dispersed system holding a very delicate balance of dispersion stability - such that surface active agent A somewhat instabilizes the system so that the dispersed droplets may not retain a spherical shape and yet be prevented from agglomerating among themselves.

### EXAMPLES

The present invention will now be illustrated in greater detail with reference to Examples and Comparative Examples, but it should be understood that the present invention is not construed as being limited thereto.

Tests in Examples and Comparative Examples were carried out according to the following test methods.

### [Measurement of Equilibrated Water Absorption on Swelling]

One gram of a polymer is dispersed in a large excess of physiological saline (0.9% aqueous solution of sodium chloride) and allowed to be swollen until the water absorption comes to equilibrium. The polymer is collected by filtration through a 80 mesh metal net and weighed. The weight of the swollen polymer (W) is divided by the weight of the polymer before water absorption (W₀) to obtain an equilibrated water absorption on swelling (W/W₀; g/g).

### [Measurement of Water Absorption Representing Rate of Water Absorption]

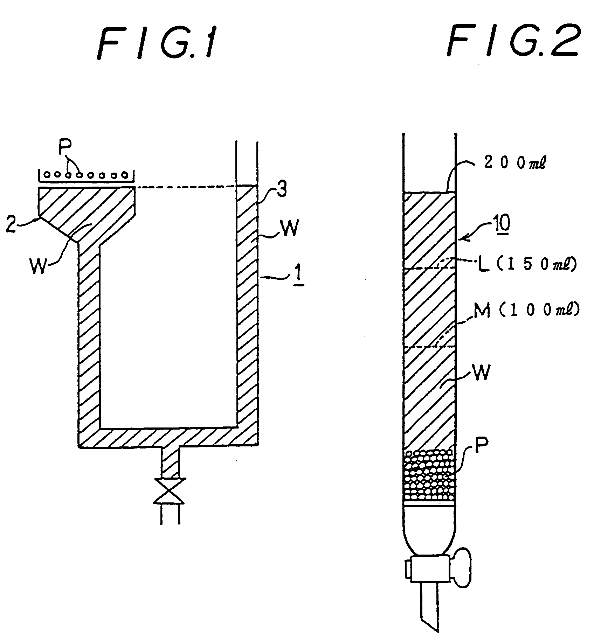

A demand wettability tester shown in Fig. 1 which is generally known as an apparatus for carrying out a DW method is used. As shown in Fig. 1, physiological saline W is put in the tester with the two liquid levels being equal, and 0.3 g of polymer P is scattered on mount 2 (diameter: 70 mm; No. 1 glass filter having placed thereon No. 2 filter paper). Taking the water absorption at the time of scattering the polymer as zero, the water absorption after 30 seconds is measured by reading the scale on the burette indicating a drop of the liquid level of physiological saline W. The measured value is taken as a water absorption (ml) representing the rate of water absorption.

### [Measurement of Rate of Permeation to Physiological Saline]

In apparatus 10 shown in Fig. 2 (cylindrical glass filter (inner diameter: 25.6 mm; length of cylindrical portion: about 500 mm) with a cock) is put 0.5 g of a polymer and swollen to equilibrium with excess physiological saline. The cock is closed with the liquid level adjusted to a height of 200 ml from the bottom. On confirming that the swollen polymer P has been sedimented sufficiently as illustrated, the cock is opened, and the time required for physiological saline W to pass through the section between two gage marks, L (150 ml high from the bottom) and M (100 ml high from the bottom), which corresponds to a 50 ml portion, is measured. The amount (ml) of the liquid between the gage marks is divided by the measured time (min) to obtain a rate of liquid permeation (ml/min).

### [Calculation of Average Particle Size]

A polymer weighing 100 g is classified using JIS sieves. An average particle size is calculated from the weight percent of each fraction.

### EXAMPLE 1

Acrylic acid (102.0 g) was diluted with 25.5 g of water and neutralized with 140.0 g of a 30 wt% aqueous solution of sodium hydroxide while cooling. To the solution was added 7.9 g of a 5.2 wt% aqueous solution of potassium persulfate to prepare a uniform aqueous monomer/initiator solution.

Separately, 400 ml of cyclohexane was put into a 1000 ml flask equipped with a reflux condenser, a dropping funnel, a stirring rod, and a tube for introducing nitrogen, and 5.1 g of polyoxyethylene sorbitan monooleate having an HLB of 15.0 (EO: 20 mol-adduct; trade name: Rheodol TW-0120, produced by Kao Corporation) was added thereto as a dispersant, followed by stirring at 350 rpm to disperse. After displacing the atmosphere with nitrogen, the mixture was heated to 75°C to reflux cyclohexane, and the above-prepared monomer/initiator aqueous solution was added thereto dropwise over a period of 1 hour. After completion of the addition, the mixture was further stirred at 75°C for 0.5 hour and then at 80°C for 4 hours to conduct polymerization.

After completion of the polymerization, the product was collected and dried under reduced pressure to obtain 107.5 g of a sodium acrylate polymer. The resulting polymer was granular particles having a distorted shape, an average particle size of 680 µm, and a bulk density of 0.47 g/ml. Scarcely did the polymer contain fine particles of 100 µm or smaller. The individual polymer particles had a structure looking like irregular-shaped particles of several to 20 lm in diameter adhered together, with extremely remarkable unevenness on their surface.

### EXAMPLE 2

In 25.5 g of water was dissolved 102.0 g of acrylic acid and neutralized with 140.0 g of a 30 wt% aqueous solution of sodium hydroxide while cooling. To the solution were added 7.9 g of a 5.2 wt% aqueous solution of potassium persulfate and 0.051 g of an epoxy-containing bifunctional crosslinking agent (ethylene glycol diglycidyl ether; trade name: Denacol EX 810, produced by Nagase Kasei Kogyo K.K.) to prepare a uniform monomer/initiator aqueous solution.

Separately, 400 ml of cyclohexane was put into a 1000 ml flask equipped with a reflux condenser, a dropping funnel, a stirring rod, and a tube for introducing nitrogen, and 5.1 g of polyoxyethylene sorbitan monooleate having an HLB of 15.0 (EO: 20 mol-adduct; trade name: Rheodol TW-0120, produced by Kao Corporation) was added thereto, followed by stirring at 350 rpm to disperse. After displacing the atmosphere with nitrogen, the mixture was heated to 75°C to reflux cyclohexane, and the above-prepared monomer/initiator aqueous solution was added thereto dropwise over a period of 1 hour. After completion of the addition, the mixture was further stirred at 75°C for 0.5 hour and then at 80°C for 4 hours to conduct polymerization.

After completion of the polymerization, the product was collected and dried under reduced pressure to give 105.3 g of a sodium acrylate polymer. The resulting polymer was granular particles having a distorted shape, an average particle size of 570 µm, and a bulk density of 0.45 g/ml. Scarcely did the polymer contain fine particles of 100 µm or smaller. The individual polymer particles had a structure looking like irregular-shaped particles of several to 20 µm adhered together, with extremely remarkable unevenness on their surface.

The resulting polymer was evaluated by measuring an equilibrated water absorption on swelling, a water absorption representing a rate of water absorption, and a rate of permeation to physiological saline. The results obtained are shown in Table 1 below.

### EXAMPLE 3

In the same manner as in Example 2, except for using 2.5 g of polyoxyethylene sorbitan monooleate having an HLB of 15.0 (EO: 20 mol-adduct; trade name: Rheodol TW-0120, produced by Kao Corporation) as a dispersant, 111.1 g of sodium polyacrylate was obtained. The resulting polymer was granular particles of distorted shape which had an average particle size of 710 µm and a bulk density of 0.36 g/ml and scarcely contained fine particles of 100 µm or smaller. The individual polymer particles had a structure looking like irregular-shaped particles of 10 to 50 µm adhered together, with extremely remarkable unevenness on their surface.

The resulting polymer was evaluated in the same manner as in Example 2. The results obtained are shown in Table 1.

### EXAMPLE 4

In the same manner as in Example 2, except for using 1.5 g of polyoxyethylene sorbitan monooleate having an HLB of 15.0 (EO: 20 mol-adduct; trade name: Rheodol TW-0120, produced by Kao Corporation) as a dispersant and changing the amount of cyclohexane to 800 ml, 115.1 g of sodium polyacrylate was obtained. The resulting polymer was granular particles of distorted shape having an average particle size of 370 µm and a bulk density of 0.55 g/ml and scarcely containing fine particles of 100 µm or smaller. The individual polymer particles had a structure looking like irregular-shaped particles of 20 to 50 µm adhered together, with extremely remarkable unevenness on their surface.

The resulting polymer was evaluated in the same manner as in Example 2. The results obtained are shown in Table 1.

### EXAMPLE 5

In the same manner as in Example 4, except for replacing polyoxyethylene sorbitan monooleate having an HLB of 15.0 (EO: 20 mol-adduct; trade name: Rheodol TW-0120, produced by Kao Corporation) with polyoxyethylene sorbitan monolaurate having an HLB of 13.3 (EO: 6-mol adduct; trade name: Rheodol TW-L106, produced by Kao Corporation) as a dispersant, 102.5 g of sodium polyacrylate was obtained. The resulting polymer was granular particles of distorted shape having an average particle size of 940 µm and a bulk density of 0.74 g/ml and scarcely containing fine particles of 100 µm or smaller. The individual polymer particles had a structure looking like irregular-shaped particles of 50 to 200 µm adhered together, with extremely remarkable unevenness on their surface.

The resulting polymer was evaluated in the same manner as in Example 2. The results obtained are shown in Table 1.

### EXAMPLE 6

In the same manner as in Example 4, except for replacing polyoxyethylene sorbitan monooleate having an HLB of 15.0 (EO: 20 mol-adduct; trade name: Rheodol TW-0120, produced by Kao Corporation) with polyoxyethylene sorbitan monolaurate having an HLB of 16.7 (EO: 20-mol adduct; trade name: Rheodol TW-L120, produced by Kao Corporation) as a dispersant, 117.5 g of sodium polyacrylate was obtained. The resulting polymer was granular particles of distorted shape having an average particle size of 630 µm and a bulk density of 0.52 g/ml and scarcely containing fine particles of 100 µm or smaller. The individual polymer particles had a structure looking like irregular-shaped particles of 50 to 200 µm adhered together, with extremely remarkable unevenness on their surface.

The resulting polymer was evaluated in the same manner as in Example 2. The results obtained are shown in Table 1.

### EXAMPLE 7

In the same manner as in Example 4, except for replacing polyoxyethylene sorbitan monooleate having an HLB of 15.0 (EO: 20 mol-adduct; trade name: Rheodol TW-0120, produced by Kao Corporation) with 2.5 g of polyoxyethylene sorbitan monostearate having an HLB of 14.9 (EO: 20-mole adduct; trade name: Rheodol TW-S120, produced by Kao Corporation) as a dispersant, 101.0 g of sodium polyacrylate was obtained. The resulting polymer was granular particles of distorted shape having an average particle size of 750 µm and a bulk density of 0.39 g/ml and scarcely containing fine particles of 100 µm or smaller. The individual polymer particles had a structure looking like irregular-shaped particles of 10 to 50 µm in diameter adhered together, with extremely remarkable unevenness on their surface.

The resulting polymer was evaluated in the same manner as in Example 2. The results obtained are shown in Table 1.

### EXAMPLE 8

In the same manner as in Example 6, except for using a mixed surface active agent having an HLB of 13.9 as a dispersant, which consisted of 1.5 g of polyoxyethylene sorbitan monolaurate having an HLB of 16.7 (EO: 20 mol-adduct; trade name: Rheodol TW-L120, produced by Kao Corporation) and 1.0 g of polyoxyethylene sorbitan monostearate having an HLB of 9.6 (EO: 6-mol adduct; trade name: Rheodol TW-S106, produced by Kao Corporation), 109.9 g of sodium polyacrylate was obtained. The resulting polymer was granular particles of distorted shape having an average particle size of 880 µm and a bulk density of 0.66 g/ml and scarcely containing fine particles of 100 µm or smaller. The individual polymer particle had a structure looking like irregular-shaped particles of 50 to 150 µm in diameter adhered together, with extremely remarkable unevenness on their surface.

The resulting polymer was evaluated in the same manner as in Example 2. The results obtained are shown in Table 1.

### EXAMPLE 9

In the same manner as in Example 4, except for replacing polyoxyethylene sorbitan monooleate having an HLB of 15.0 (EO: 20 mol-adduct; trade name: Rheodol TW-0120, produced by Kao Corporation) with 0.5 g of sucrose stearate having an HLB of 15.0 (trade name: Ryoto Sugar Ester S-1570, produced by Mitsubishi Kasei Shokuhin K.K.) as a dispersant, 118.2 g of sodium polyacrylate was obtained. The resulting polymer was granular particles of distorted shape having an average particle size of 420 µm and a bulk density of 0.55 g/ml and scarcely containing fine particles of 100 µm or smaller. The individual polymer particles had a structure looking like irregular-shaped particles of 10 to 50 µm in diameter adhered together, with extremely remarkable unevenness on their surface.

The resulting polymer was evaluated in the same manner as in Example 2. The results obtained are shown in Table 1.

### EXAMPLE 10

In the same manner as in Example 4, except for replacing polyoxyethylene sorbitan monooleate having an HLB of 15.0 (EO: 20 mol-adduct; trade name: Rheodol TW-0120, produced by Kao Corporation) with 0.8 g of sucrose stearate having an HLB of 16.0 (trade name: Ryoto Sugar Ester S-1670, produced by Mitsubishi Kasei Shokuhin K.K.) as a dispersant, 116.3 g of sodium polyacrylate was obtained. The resulting polymer was granular particles of distorted shape having an average particle size of 530 µm and a bulk density of 0.59 g/ml and scarcely containing fine particles of 100 µm or smaller. The individual polymer particle had a structure looking like irregular-shaped particles of 10 to 50 µm adhered together, with extremely remarkable unevenness on their surface.

The resulting polymer was evaluated in the same manner as in Example 2. The results obtained are shown in Table 1.

### EXAMPLE 11

In the same manner as in Example 4, except for replacing polyoxyethylene sorbitan monooleate having an HLB of 15.0 (EO: 20 mol-adduct; trade name: Rheodol TW-0120, produced by Kao Corporation) with 5.1 g of polyoxyethylene sorbitol tetraoleate having an HLB of 13.8 (EO: 60-mol adduct; trade name: Rheodol 460, produced by Kao Corporation) as a dispersant, 105.0 g of sodium polyacrylate was obtained. The resulting polymer was granular particles of distorted shape having an average particle size of 890 µm and a bulk density of 0.61 g/ml and scarcely containing fine particles of 100 µm or smaller. The individual polymer particle had a structure looking like irregular-shaped particles of 100 to 200 µm adhered together, with extremely remarkable unevenness on their surface.

The resulting polymer was evaluated in the same manner as in Example 2. The results obtained are shown in Table 1.

### EXAMPLE 12

Acrylic acid (102.0 g) was diluted with 25.5 g of water and neutralized with 140.0 g of a 30 wt% aqueous solution of sodium hydroxide while cooling. To the solution was added 7.9 g of a 5.2 wt% aqueous solution of potassium persulfate to prepare a uniform monomer/initiator aqueous solution.

Separately, 400 ml of cyclohexane was put in a 1000 ml flask equipped with a reflux condenser, a dropping funnel, a stirring rod, and a tube for introducing nitrogen, and 5.1 g of polyoxyethylene sorbitan monooleate having an HLB of 15.0 (EO: 20 mol-adduct; trade name: Rheodol TW-0120, produced by Kao Corporation) was added thereto as a dispersant, followed by stirring at 350 rpm to disperse. After displacing the atmosphere with nitrogen, the mixture was heated to 75°C to reflux cyclohexane, and the above-prepared monomer/initiator aqueous solution was added thereto dropwise over a period of 30 minutes. After completion of the addition, the mixture was further stirred at 75°C for 1.5 hours and then at 80°C for 4 hours to conduct polymerization while driving only water out of the system from the azeotropic refluxing mixture of cyclohexane and water. At the point where the water content of the sodium polyacrylate particles produced reached 30 wt%, 0.25 g of an epoxy-containing polyfunctional crosslinking agent (polyglycerin polyglycidyl ether; trade name: Denacol EX 512, produced by Nagase Kasei Kogyo K.K.) was added to the reaction system, followed by further allowing the mixture to react for 30 minutes. The product was collected and dried under reduced pressure to obtain 119.7 g of partially cross-linked sodium polyacrylate.

The resulting polymer was granular particles of distorted shape having an average particle size of 650 µm and a bulk density of 0.47 g/ml. Scarcely did the polymer contain fine particles of 100 µm or smaller. The individual polymer particles had a structure looking like irregular-shaped particles of several to 20 µm in diameter adhered together, with extremely remarkable unevenness on their surface.

The resulting polymer was evaluated in the same manner as in Example 4. The results obtained are shown in Table 1.

### EXAMPLE 13

Acrylic acid (60.0 g) was diluted with 15.0 g of water and neutralized with 82.4 g of a 30 wt% aqueous solution of sodium hydroxide while cooling. To the solution were added 4.4 g of a 5.2 wt% aqueous solution of potassium persulfate, 1.60 g of sucrose stearate having an HLB of 16.0 (trade name: Ryoto Sugar Ester S-1670, produced by Mitsubishi Kasei Shokuhin K.K.) as a dispersant, and 260 ml of cyclohexane, and the mixture was stirred. The atmosphere was displaced with nitrogen to obtain an aqueous monomer solution (W/O emulsion).

Separately, 500 ml of cyclohexane was put in a 1000 ml flask equipped with a reflux condenser, a dropping funnel, a stirring rod, and a tube for introducing nitrogen. After displacing the atmosphere with nitrogen, the mixture was heated to 75°C to reflux cyclohexane, and the above-prepared aqueous monomer solution was added thereto dropwise over a period of 1 hour while stirring at 350 rpm. After completion of the addition, the mixture was further stirred at 75°C for 1.5 hours and then at 80°C for 4 hours to conduct polymerization while driving only water out of the system from the azeotropic refluxing mixture of cyclohexane and water. At the point where the water content of the sodium polyacrylate particles produced reached 30 wt%, 0.25 g of an epoxy-containing polyfunctional crosslinking agent (polyglycerin polyglycidyl ether; trade name: Denacol EX 512, produced by Nagase Kasei Kogyo K.K.) was added to the reaction system, followed by further allowing the mixture to react for 30 minutes. The product was collected and dried under reduced pressure to give 73.5 g of partially cross-linked sodium polyacrylate.

The resulting polymer was granular particles of distorted shape having an average particle size of 430 µm and a bulk density of 0.52 g/ml. Scarcely did the polymer contain fine particles of 100 µm or smaller. The individual polymer particles had a structure looking like irregular-shaped particles of 10 to 50 µm adhered together, with extremely remarkable unevenness on their surface.

The resulting polymer was evaluated in the same manner as in Example 4. The results obtained are shown in Table 1.

### COMPARATIVE EXAMPLE 1

A sodium acrylate polymer was obtained in the same manner as in Example 2, except for replacing polyoxyethylene sorbitan monooleate having an HLB of 15.0 (EO: 20 mol-adduct; trade name: Rheodol TW-0120, produced by Kao Corporation) with 0.9 g of ethyl cellulose having an HLB of 5.49 (trade name: Ethyl Cellulose N-7, produced by Hercules Inc.; degree of ethoxy substitution: 2.41 to 2.51; the HLB is a value calculated by using an organic concept diagram based on the monomer unit) as a dispersant. The resulting polymer was spherical particles having a particle size of 330 µm and a bulk density of 0.94 g/ml.

The resulting polymer was evaluated in the same manner as in Example 2. The results obtained are shown in Table 1.

### COMPARATIVE EXAMPLE 2

In the same manner as in Example 2, except for replacing polyoxyethylene sorbitan monooleate having an HLB of 15.0 (EO: 20 mol-adduct; trade name: Rheodol TW-0120, produced by Kao Corporation) with 2.9 g of sorbitan monooleate having an HLB of 5.0 (trade name: Rheodol SP-S10, produced by Kao Corporation) as a dispersant, 117.9 g of sodium polyacrylate was obtained. The resulting polymer was a mixture of spherical particles having a particle size of 50 µm and secondary particles having an average particle size of 590 µm, which were agglomerates of the spherical fine particles. The bulk density of the mixed particles was 0.65 g/ml. When the resulting secondary particles were poured into physiological saline, part of them returned easily to individual primary particles.

The resulting polymer was evaluated in the same manner as in Example 2. The results obtained are shown in Table 1.

### COMPARATIVE EXAMPLE 3

In the same manner as in Example 2, except for replacing polyoxyethylene sorbitan monooleate having an HLB of 15.0 (EO: 20 mol-adduct; trade name: Rheodol TW-0120, produced by Kao Corporation) with 1.8 g of polyoxyethylene sorbitan monostearate having an HLB of 9.6 (trade name: Rheodol TW-S106, produced by Kao Corporation) as a dispersant, 117.9 g of sodium polyacrylate was obtained. The resulting polymer had a bulk density of 0.68 g/ml and mainly comprised lumpy particles having many projections on their surface and a particle size of 3 to 30 mm with several percents of fine particles of several microns.

The resulting polymer was evaluated in the same manner as in Example 2. The results obtained are shown in Table 1.

### COMPARATIVE EXAMPLE 4

In the same manner as in Example 2, except for replacing polyoxyethylene sorbitan monooleate having an HLB of 15.0 (EO: 20 mol-adduct; trade name: Rheodol TW-0120, produced by Kao Corporation) with 1.8 g of a sugar ester having an HLB of 11.0 (trade name: Ryoto Sugar Ester S-117, produced by Mitsubishi Kasei Shokuhin K.K.) as a dispersant, 118.6 g of sodium polyacrylate was obtained. The resulting polymer was spherical particles having an average particle size of 13 µm and a bulk density of 0.59 g/ml.

The resulting polymer was evaluated in the same manner as in Example 2. The results obtained are shown in Table 1.

### COMPARATIVE EXAMPLE 5

In the same manner as in Example 12, except for replacing polyoxyethylene sorbitan monooleate having an HLB of 15.0 (EO: 20 mol-adduct; trade name: Rheodol TW-0120, produced by Kao Corporation) with 0.9 g of ethyl cellulose having an HLB of 5.49 (trade name: Ethyl Cellulose N-7, produced by Hercules Inc.; degree of ethoxy substitution: 2.41 to 2.51; the HLB is a value calculated by using an organic concept diagram based on the monomer unit) as a dispersant, 118.3g of sodium polyacrylate was obtained. The resulting polymer was spherical particles having an average particle size of 350 µm and a bulk density of 0.93 g/ml.

The resulting polymer was evaluated in the same manner as in Example 2. The results obtained are shown in Table 1.

### COMPARATIVE EXAMPLE 6

Acrylic acid (102.0 g) was diluted with 25.5 g of water and neutralized with 140.0 g of a 30 wt% aqueous solution of sodium hydroxide while cooling. To the solution were added 7.9 g of a 5.2 wt% aqueous solution of potassium persulfate and 0.051 g of an epoxy-containing bifunctional crosslinking agent (ethylene glycol diglycidyl ether; trade name: Denacol EX 810, produced by Nagase Kasei Kogyo K.K.) to prepare a uniform aqueous solution of monomer/initiator. Polymerization was carried out using the resulting monomer/initiator aqueous solution in accordance with an all-at-once polymerization method as follows.

In a 1000 ml flask equipped with a reflux condenser, a dropping funnel, a stirring rod, and a tube for introducing nitrogen was put 400 ml of cyclohexane, and 5.1 g of polyoxyethylene sorbitan monooleate having an HLB of 15.0 (EO: 20-mol adduct; "Rheodol TW-0120" produced by Kao Corporation) was added thereto as a dispersant and dispersed by stirring at 350 rpm. After displacing the atmosphere with nitrogen, the above prepared monomer/initiator aqueous solution was added thereto dropwise and suspended. After thorough displacement of the system, the temperature was raised to conduct polymerization while retaining the bath temperature at 55 to 60°C.

Several minutes from the temperature rise, polymerization vigorously took place and momentarily formed lumps of several millimeters to several centimeters. The system could not be agitated any more so that the polymerization was suspended at that point.

**TABLE 1**

| | | Equilibrated Water Absorption on Swelling (g/g) | Water Absorption Representing Rate of Water Absorption (mℓ/30 sec) | Rate of Liquid Permeation (mℓ/min) |
|---|---|---|---|---|
| Examples | 2 | 58 | 4.9 | 22 |
| | 3 | 62 | 3.9 | 25 |
| | 4 | 52 | 4.8 | 18 |
| | 5 | 68 | 2.5 | 32 |
| | 6 | 61 | 3.7 | 25 |
| | 7 | 62 | 3.5 | 23 |
| | 8 | 65 | 3.1 | 26 |
| | 9 | 55 | 4.2 | 23 |
| | 10 | 59 | 4.1 | 20 |
| | 11 | 63 | 2.9 | 26 |
| | 12 | 65 | 6.8 | 53 |
| | 13 | 57 | 4.7 | 22 |
| Comparative Examples | 1 | 53 | 2.7 | 2.3 |
| | 2 | 55 | 3.5 | 1.5 |
| | 3 | 53 | 3.6 | 5.4 |
| | 4 | 51 | 2.5 | 1.3 |
| | 5 | 53 | 2.8 | 5.4 |

### Industrial Applicability

The process of the present invention makes it possible to produce irregular-shaped polymer particles which have a large average particle size, contain an extremely small proportion of fine particles having a particle size of 100 µm or more, have a small apparent density, and exhibit excellent water absorption characteristics such as an initial rate of water absorption, excellent air permeability and excellent liquid permeability, and also exhibit high gel strength after water absorption and are therefore useful as a water-absorbing resin; which process can be carried out through simple operation with high productivity, and is applicable to mass production.

The irregular-shaped polymer particles obtained by the process of the present invention exhibit particularly excellent water absorbability and are therefore useful as a super absorbent polymer in sanitary products which are brought into contact with a human body, such as sanitary napkins, disposable diapers, underwear for adults, tampons, and absorbent wadding, and the like. Further, since the polymer hardly undergoes deterioration of its gel structure in long-term use and also has resilience, it is useful as a water-retaining material for horticulture or a water stopping material for civil engineering. The polymer is also expected to be applicable to cosmetic applicators whose shape, resilience, water absorbability, and air permeability are of importance.

## Claims

1. A process for producing irregular-shaped polymer particles, comprising carrying out reverse phase suspension polymerization of a water-soluble polymerizable monomer in a hydrophobic organic solvent inert to the polymerization in the presence of a water-soluble radical polymerization initiator, the process being characterized in that:
the reverse phase suspension polymerization is carried out in the presence of a surface active agent having an HLB of 13 or more, exclusive of a glycoside compound having a chemical structure in which a hydrogen atom of a hemi-acetal bond is substituted for a hydrophobic group and a gluconamide compound, as a dispersant, while gradually feeding an aqueous solution of the water-soluble polymerizable monomer to the hydrophobic organic solvent under reflux.

2. The process for producing irregular-shaped polymer particles according to claim 1, wherein the surface active agent is a polyoxyalkylene sorbitan fatty acid ester or a polyoxyalkylene sorbitol fatty acid ester having a HLB of 13 to 18.

3. The process for producing irregular-shaped polymer particles according to claim 1, wherein the surface active agent is a sucrose fatty acid ester having a HLB of 16 to 18.

4. The process for producing irregular-shaped polymer particles according to claim 1, wherein the surface active agent is a polyoxyalkylene glycerin fatty acid ester or a polyglycerin fatty acid ester having a HLB of 13 to 18.

5. The process for producing irregular-shaped polymer particles according to any one of claims 1 to 4, wherein the water soluble polymerizable monomer is an olefinic unsaturated carboxylic acid or an alkali salt thereof.
